# EUROPEAN PATENT SPECIFICATION

(11) **EP 3 392 353 B1**
(45) Date of publication and mention of the grant of the patent: **30.10.2019**
(21) Application number: 16876026.2
(22) Date of filing: 14.12.2016
(51) Int. Cl.: C21B 13/00, C21B 13/14

(54) **METHOD FOR MANUFACTURING MOLTEN IRON**
VORRICHTUNG ZUR HERSTELLUNG VON EISENSCHMELZE
PROCÉDÉ DE FABRICATION DE FONTE LIQUIDE

(30) Priority: 14.12.2015 KR 20150178172
(43) Date of publication of application: 24.10.2018
(73) Proprietor: Posco, Pohang-si, Gyeongsangbuk-do 37859 (KR)
(72) Inventor: CHOI, Eung Soo, Pohang-si Gyeongsangbuk-do 37859 (KR); YI, Joon Giu, Pohang-si Gyeongsangbuk-do 37859 (KR); BAE, Jin Chan, Pohang-si Gyeongsangbuk-do 37859 (KR)
(74) Representative: Zech, Stefan Markus
(86) International application number: PCT/KR2016/014662
(87) International publication number: WO 2017/105084

(56) References cited:
- WO-A1-02/088401
- WO-A1-03/025230
- KR-A- 20010 065 011
- KR-A- 20020 083 638
- KR-A- 20030 013 057
- KR-A- 20030 013 057
- KR-A- 20030 042 981
- KR-B1- 101 405 483

## Description

### [Technical Field]

The present invention relates to a method for manufacturing molten iron. More particularly, the present invention relates to a method for manufacturing molten iron by blowing an iron-containing by-product into a melting gasification furnace through a tuyere.

### [Background Art]

In a smelting reduction iron making process, iron ores are reduced in a reduction furnace, and a melting gasification furnace for melting the reduced iron ores is used.

When iron ores are melted in a melting gasification furnace, coal is charged into the melting gasification furnace as a heat source for melting the iron ores. Here, reduced iron is melted in the melting gasification furnace, and then converted into molten iron and slag, and the molten iron and slag are discharged from the melting gasification furnace. The coal charged into the melting gasification furnace forms a coal packed bed. Oxygen is blown into the melting gasification furnace through a tuyere installed in the melting gasification furnace, and the coal packed bed is burned by the oxygen to generate combustion gas. The combustion gas is converted into high-temperature reducing gas while rising through the coal packed bed. The high-temperature reducing gas is discharged from the melting gasification furnace and supplied as reducing gas to a reduction furnace.

WO 02/088401 A1 relates to recycling method of waste material in use for a coal based iron making process, which allows recycling of waste material such as dust and sludge outputted from iron and steel works. In WO 02/088401 A1, sludge and dust outputted from iron and steel works are blown after adjusting composition and particle size thereof, thereby recycling them in an iron making reduction-melting process.

WO 03/025230 A1 provides a byproduct sludge recycling apparatus in an ironmaking system capable of powdering wet sludge by-produced from process water used in discharge gas scrubbers and then loading sludge powder into reduction reactors. According to WO 03/025230 A1, carbon and iron contained in sludge by a large quantity can be recycled to reduce maintenance cost.

### [DISCLOSURE]

### [Technical Problem]

The present invention has been made in an effort to provide a method for manufacturing molten iron having advantages of blowing iron-containing by-products into a melting gasification furnace through a tuyere.

### [Technical Solution]

According to an exemplary embodiment of the present invention, a method for manufacturing molten iron includes i) providing an iron-containing by-product that includes sludge, ii) charging a lumped carbonaceous material and reduced iron into a melting gasification furnace, iii) crushing the iron-containing by-product together with a fine carbonaceous material to provide a mixture to be blown through a tuyere the mixture having a moisture content greater than 0 wt % and less than or equal to 2 wt %, iv) blowing, through the tuyere into the melting gasification furnace, oxygen and the mixture to be blown through the tuyere, and v) manufacturing molten iron in the melting gasification furnace. In the providing of the mixture to be blown through the tuyere, an average particle size of the iron-containing by-product is greater than 0 µm and less than or equal to 50 µm. In the providing of the mixture to be blown through the tuyere, a mixture having a particle size of 10 µm or less to be blown through the tuyere in the mixture to be blown through the tuyere is less than or equal to 40 wt %.

The providing of the iron-containing by-product may include, i) naturally drying the sludge and adjusting a moisture content of the sludge to be in a range of 15 wt % to 25 wt %, and ii) adjusting a moisture content of the iron-containing by-product to be greater than 0 wt % and less than or equal to 13 wt % by mixing the sludge and another fine carbonaceous material having a moisture content greater than 0 wt % and less than or equal to 10 wt %. In the adjusting of the moisture content of the iron-containing by-product, a volume ratio of the other fine carbonaceous material to the sludge may be greater than a mass ratio of the other fine carbonaceous material to the sludge. The volume ratio to the mass ratio may be greater than 1 and less than or equal to 1.5.

The providing of the iron-containing by-product may include, i) transferring the sludge and providing the sludge to a mixer, ii) providing another fine carbonaceous material to the mixer, and iii) adjusting a moisture content of the iron-containing by-product to be greater than 0 wt % and less than or equal to 13 wt % by mixing the sludge and the other fine carbonaceous material in the mixer. An amount of total iron (T.Fe) contained in the sludge may be greater than or equal to 20 wt % and less than 100%.

The method may further include i) converting iron ore into the reduced iron by receiving reducing gas supplied from the melting gasification furnace, and ii) providing the reduced iron to the melting gasification furnace. In the converting of the iron ore into the reduced iron, the iron ore may be charged into a fluidized-bed reduction furnace or a packed-bed reduction furnace connected to the melting gasification furnace, and may be converted into the reduced iron.

### [Advantageous Effects]

It is possible to increase a resource use efficiency by efficiently reusing iron-containing by-products such as sludge, and the like, that are generated in a steel mill. It is possible to minimize a processing cost for reusing iron-containing by-products while reducing a disposal cost of iron-containing by-products by directly reducing and melting iron-containing by-products. Also, molten iron may be manufactured using sludge, and thus it is possible to lower manufacturing costs by reducing an amount of reduced iron to be used in manufacturing of molten iron. Molten iron may be additionally manufactured by putting iron-containing by-products through a tuyere, and thus it is possible to increase a production efficiency. In addition, it is possible to enhance a quality of molten iron by stabilizing a silicon component in the molten iron.

### [Description of the Drawings]

FIG. 1 is a flowchart schematically showing a method for manufacturing molten iron according to an exemplary embodiment of the present invention.
FIG. 2 is a view schematically showing a molten iron manufacturing apparatus to which the method of FIG. 1 is applied.
FIG. 3 is a flowchart schematically showing an iron-containing by-product providing step in the method of FIG. 1.
FIG. 4 is another flowchart schematically showing the iron-containing by-product providing step of FIG. 3.
FIG. 5 is a view showing a modified example of the molten iron manufacturing apparatus of FIG. 2.
FIG. 6 is a view showing another modified example of the molten iron manufacturing apparatus of FIG. 2.
FIG. 7 is a graph showing a wear rate of a pulverized coal transfer pipe based on an average particle size of an iron-containing by-product in experimental examples of the present invention.
FIG. 8 is a graph showing a frequency of a pipe blockage based on a moisture content and an average particle size of a mixture to be blown through a tuyere in experimental examples of the present invention.

### [Mode for Invention]

The terminology used herein is for the purpose of describing particular embodiments only and is not intended to be limiting of the present invention. Singular forms used herein include plural forms as well, unless the context clearly indicates otherwise. The meaning of "include" used in the specification specifies the presence of stated specific features, areas, integers, steps, operations, elements, and/or components thereof, but do not preclude the presence or addition of one or more other specific features, areas, integers, steps, operations, elements, components and/or groups thereof.

Unless otherwise specified, all the terms including technical terms and scientific terms used herein have the same meanings commonly understandable to a person with ordinary skill in the art to which the present invention pertains. In addition, the terms defined in generally used dictionaries are additionally interpreted to have meanings corresponding to relating scientific literatures and contents disclosed now, and are not interpreted either ideally or very formally unless defined otherwise.

In the following description, carbonaceous materials refer to all materials containing carbon. Thus, carbonaceous materials are interpreted to include coal, coke, and the like.

Hereinafter, exemplary embodiments of the present invention will be described in detail with reference to the accompanying drawings, so that a person with ordinary skill in the art to which the present invention pertains may easily carry out the present invention. The present invention may, however, be implemented in various forms and should not be construed as being limited to exemplary embodiments set forth herein.

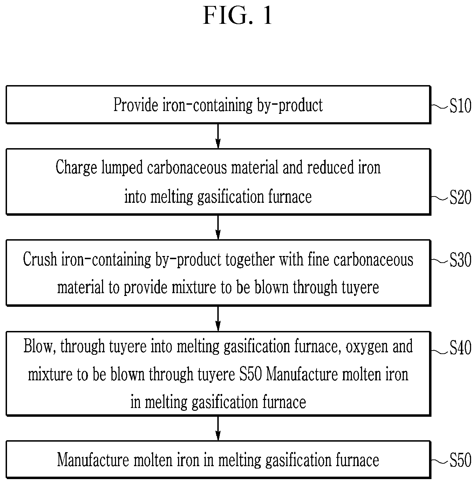

FIG. 1 is a flowchart schematically showing a method for manufacturing molten iron according to an exemplary embodiment of the present invention. The flowchart showing the method for manufacturing molten iron in FIG. 1 is merely to illustrate the present invention, and the present invention is not limited thereto. Therefore, the method for manufacturing molten iron may be variously modified.

As shown in FIG. 1, the method for manufacturing molten iron may include step S10 of providing an iron-containing by-product, step S20 of charging a lumped carbonaceous material and reduced iron into a melting gasification furnace, step S30 of crushing the iron-containing by-product together with a fine carbonaceous material to provide a mixture to be blown through a tuyere, step S40 of blowing, through the tuyere into the melting gasification furnace, oxygen and the mixture to be blown through the tuyere, and step S50 of manufacturing molten iron in the melting gasification furnace. In addition, the method for manufacturing molten iron may further include other steps, if necessary.

First, in step S10, the iron-containing by-product is provided. The iron-containing by-product includes sludge. The sludge is generated in manufacturing of steel in a steel mill. Table 1 shows components of each sludge type obtained from various processes of a steel mill. Blast furnace dust is collected by water and removed, and accordingly in this case, the blast furnace dust is converted into sludge.

**(Table 1)**

| Type of sludge | T.Fe | C | CaO | SiO₂ | Zn |
|---|---|---|---|---|---|
| Blast furnace sludge | 37.8 | 43.8 | 2.7 | 5.6 | 0.7 |
| Blast furnace dust | 38.8 | 31.7 | 3.7 | 5.6 | 0.3 |
| Melting gasification furnace sludge | 54.4 | 7.4 | 4.1 | 6.0 | 0.1 |
| Steel sludge | 54.2 | 1.9 | 14.4 | 0. | 0.4 |

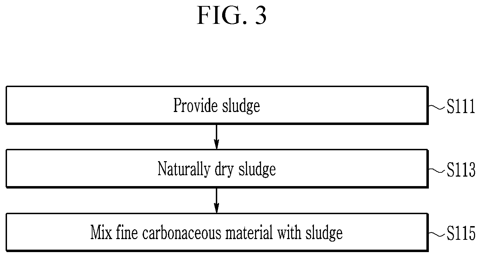

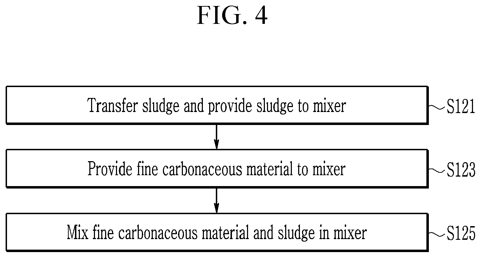

An amount of total iron (T.Fe) contained in the sludge may be greater than or equal to 20 wt % and less than 100 wt %. When the amount of total iron is extremely small, it is impossible to greatly reduce an amount of reduced iron to be used even though iron-containing by-products are charged into the melting gasification furnace. Thus, it is preferable to use the sludge containing the above-described amount of total iron. Iron-containing by-products may be manufactured in various ways to minimize sludge drying costs. A method of manufacturing an iron-containing by-product will be described in more detail with reference to FIGS. 3 and 4 below.

Next, in step S20, the lumped carbonaceous material and the reduced iron are charged into the melting gasification furnace. As a lumped carbonaceous material, lumped coal or coal briquets may be used. A particle size of the lumped carbonaceous material may be greater than or equal to 7 mm. The lumped carbonaceous material is charged through an upper part of the melting gasification furnace and passes through a high-temperature gas region of a dome portion formed on the upper part of the melting gasification furnace. For example, when a fine carbonaceous material, instead of the lumped carbonaceous material, is put into the upper part of the melting gasification furnace, it is impossible to sufficiently supply heat required to melt reduced iron located in a lower part of the melting gasification furnace, because the fine carbonaceous material is scattered immediately after meeting the high-temperature gas region of the dome portion. Unlike this, when the lumped carbonaceous material is charged into the melting gasification furnace, heat required to melt the reduced iron may be sufficiently supplied because the lumped carbonaceous material falls down to the lower part of the melting gasification furnace while being well resistant to high-temperature gas.

In step S30, the mixture to be blown through the tuyere is provided by crushing the iron-containing by-product together with the fine carbonaceous material. In other words, to prevent an increase in a proportion of large particles having an average particle size of 50 µm or greater in the iron-containing by-product, the iron-containing by-product is put into a pulverizer and crushed together with the fine carbonaceous material. As a result, since the iron-containing by-product and the fine carbonaceous material are crushed together, a moisture content of the mixture to be blown through the tuyere may be greatly reduced. Since high costs are required for drying of the sludge, the sludge may be mixed with the fine carbonaceous material instead of drying the sludge only.

Thus, a mixture that may be stably blown through the tuyere while preventing a transfer pipe from being blocked may be provided. In this case, an average particle size of the iron-containing by-product may be greater than 0 µm and may be less than or equal to 50 µm. When the average particle size of the iron-containing by-product is extremely large, the iron-containing by-product may collide against an inner wall of the transfer pipe while being conveyed and transferred, and damage the transfer pipe.

Meanwhile, when an average particle size of the mixture to be blown through the tuyere is extremely small, a transfer pipe may be blocked. A method of preventing a blockage of the transfer pipe by increasing a diameter of the transfer pipe is present. However, in this case, there is a problem of needing to increase a flow rate of air or nitrogen that is carrier gas to transfer the mixture to be blown through the tuyere due to a decrease in a flow velocity of the mixture to be blown through the tuyere.

More preferably, a mixture having a particle size of 10 µm or less to be blown through the tuyere in the mixture to be blown through the tuyere may be adjusted to be less than or equal to 40 wt %. In other words, when an amount of the mixture having the particle size of 10 µm or less to be blown through the tuyere is extremely large, ultra fine powder mainly adheres to a bending portion in a pipe to block the pipe. Thus, it is preferable to adjust the amount of the mixture having the particle size of 10 µm or less to be blown through the tuyere to be within the above-described range.

Meanwhile, a moisture content of the mixture to be blown through the tuyere may be greater than 0 wt % and less than or equal to 2 wt %. When the moisture content of the mixture to be blown through the tuyere is extremely high, the mixture to be blown through the tuyere may adhere to an inside of a transfer pipe of the mixture to block the transfer pipe. Thus, it is preferable to adjust the moisture content of the mixture to be blown through the tuyere to be within the above-described range. Meanwhile, sludge that is an iron-containing by-product may be supplied directly to the pulverizer using a mono pump, and crushed together with a fine carbonaceous material, to be used. For example, sludge with a moisture content of 30 wt % may be transferred directly to the pulverizer using a mono pump, and the like, to prepare a mixture to be blown through the tuyere.

Next, in step S40, oxygen and the mixture to be blown through the tuyere are blown into the melting gasification furnace through the tuyere. A plurality of tuyeres are spaced apart at preset intervals and installed around the lower part of the melting gasification furnace. The mixture to be blown through the tuyere is mixed with oxygen in advance and is blown together with oxygen into the melting gasification furnace. To increase conveyance force of the mixture to be blown through the tuyere, carrier gas such as nitrogen, and the like, may also be used, if necessary.

Last, in step S50, the molten iron is manufactured in the melting gasification furnace. The mixture blown through the tuyere contains a large amount of iron. Since high-temperature heat is generated by a large amount of lumped carbonaceous materials and fine carbonaceous materials in a combustion zone in front of the tuyere, an amount of molten iron generated by melting iron included in sludge may be greatly increased. In this case, a portion of reduced iron to be charged into the melting gasification furnace may be replaced by a mixture to be blown through the tuyere, and thus it is possible to greatly reduce fuel costs.

Conventionally, research has been conducted on a method of directly conveying and blowing an iron-containing by-product to a tuyere of a blast furnace, and the like. However, since a density of the iron-containing by-product is higher than that of coal in terms of a density, there was a problem in that a transfer pipe is worn by the iron-containing by-product when the iron-containing by-product has a large particle size. On the contrary, when the iron-containing by-product has an extremely small particle size or a high moisture content, the iron-containing by-product adhered to an inner wall of the transfer pipe, and a pipe blockage phenomenon occurred. Accordingly, although the moisture content of the iron-containing by-product was intended to be reduced, there was a problem in that an economical efficiency is lowered since a large amount of energy is required for drying.

To prevent the above phenomenon, in an exemplary embodiment of the present invention, when the iron-containing by-product is blown through the tuyere, an appropriate particle size range and a moisture content of the iron-containing by-product were controlled.

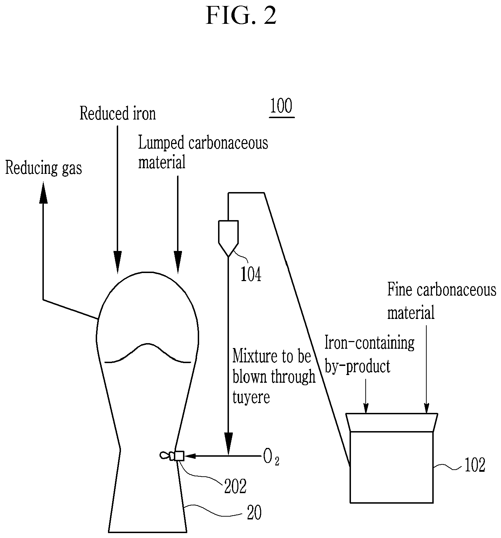

FIG. 2 schematically shows a molten iron manufacturing apparatus 100 to which the method of FIG. 1 is applied. The molten iron manufacturing apparatus 100 of FIG. 2 is merely to illustrate the present invention, and the present invention is not limited thereto. Thus, the molten iron manufacturing apparatus 100 may be modified in other forms.

As shown in FIG. 2, the molten iron manufacturing apparatus 100 includes a melting gasification furnace 20, a crusher 102 and a hopper 104. In addition, the molten iron manufacturing apparatus 100 may further include other devices, if necessary. An iron-containing by-product and a fine carbonaceous material are charged into the crusher 102 and are crushed together. The iron-containing by-product and the fine carbonaceous material are properly mixed in the crusher 102 and are provided as a mixture to be blown through a tuyere. The mixture to be blown through the tuyere is stored in the hopper 104, and then is supplied together with oxygen to an inside of the melting gasification furnace through a tuyere 202. Since reduced iron and a lumped carbonaceous material are charged into an upper part of the melting gasification furnace 20, the reduced iron, and iron contained in the mixture to be blown through the tuyere may be melted by heat of combustion of the lumped carbonaceous material, to manufacture molten iron. Meanwhile, since the fine carbonaceous material is contained in the mixture to be blown through the tuyere, iron contained in the mixture to be blown through the tuyere may be melted by heat of combustion of the fine carbonaceous material. Meanwhile, reducing gas generated in the melting gasification furnace 20 is discharged from the melting gasification furnace 20. Hereinafter, a method of manufacturing an iron-containing by-product will be described in more detail with reference to FIGS. 3 and 4.

FIG. 3 is a flowchart schematically showing an iron-containing by-product providing step in the method of FIG. 1. The flowchart showing the iron-containing by-product providing step in FIG. 3 is merely to illustrate the present invention, and the present invention is not limited thereto. Thus, the flowchart of FIG. 3 showing the iron-containing by-product providing step may be variously modified.

As shown in FIG. 3, a step of providing an iron-containing by-product includes step S111 of providing sludge, step S113 of naturally drying the sludge, and step S115 of mixing a fine carbonaceous material with the sludge. In addition, the step of providing the iron-containing by-product may further include other steps, if necessary.

First, in step S111, the sludge is provided. Here, a moisture content of the sludge may be about 30 wt %. In other words, dust generated during a process in a steel mill may be collected by water and removed, thereby obtaining sludge.

Next, in step S113, the sludge is naturally dried. In other words, typically, sludge containing moisture of about 30 wt % is heaped outdoors and dried. In this case, a moisture content of the sludge may be adjusted to be in a range of 15 wt % to 25 wt %. In other words, a portion of moisture contained in the sludge may be removed by naturally drying the sludge. Alternatively, a pipe through which steam passes on a floor may be constructed, and the sludge may be heaped thereon and dried.

In step S115, the fine carbonaceous material is mixed with the sludge. A moisture content of the fine carbonaceous material may be in a range of 8 wt % to 10 wt %. When a moisture content of the fine carbonaceous material is extremely low, the fine carbonaceous material is scattered. Also, when the moisture content of the fine carbonaceous material is extremely high, it is impossible to reduce the moisture content of the sludge even though the sludge is mixed with the fine carbonaceous material. Thus, it is preferable to adjust the moisture content of the fine carbonaceous material to be in the above-described range. An iron-containing by-product with a moisture content greater than 0 wt % and less than or equal to 13 wt % may be manufactured by mixing the fine carbonaceous material and the sludge.

When the iron-containing by-product has an extremely high moisture content, the iron-containing by-product may not be conveyed well and an energy efficiency may be degraded. Thus, the moisture content of the iron-containing by-product may be adjusted to be in the above-described range. A blending ratio of the sludge and the fine carbonaceous material may be adjusted based on the moisture content of the iron-containing by-product. The sludge and the fine carbonaceous material are properly mixed by utilizing a volume ratio using a wheel loader. Table 2 shows an example of a mixing ratio of the sludge and the fine carbonaceous material below.

**(Table 2)**

| Classification | Sludge | Fine carbonaceous material | Average |
|---|---|---|---|
| Moisture content (wt %) | 20 | 10 | 12.9 |
| Volume ratio | 1 | 3 | |
| Density (g/m³) | 1.10 | 0.80 | 0.89 |
| Mass ratio | 29 | 71 | |

When a volume ratio of the fine carbonaceous material to the sludge is extremely high, it may be difficult to transfer a mixture of the sludge and the fine carbonaceous material.

Also, an average moisture content of iron-containing by-products manufactured by mixing the sludge and the fine carbonaceous material may be adjusted to be less than or equal to 13%.

FIG. 4 schematically shows another flowchart of the iron-containing by-product providing step of FIG. 3. The flowchart showing the iron-containing by-product providing step in FIG. 4 is merely to illustrate the present invention, and the present invention is not limited thereto. Therefore, the flowchart of FIG. 4 showing the iron-containing by-product providing step may be variously modified.

As shown in FIG. 4, the iron-containing by-product providing step includes step S121 of transferring sludge and providing the sludge to a mixer, step S123 of providing a fine carbonaceous material to the mixer, and step S125 of mixing the sludge and the fine carbonaceous material in the mixer. In addition, the iron-containing by-product providing step may further include other steps, if necessary.

First, in step S121, the sludge is transferred using a mono pump, and the like, and provided to the mixer. A transfer screw that is horizontally extended may be installed in the mixer. Using the transfer screw, the sludge and the fine carbonaceous material are transferred while being uniformly mixed.

Next, in step S123, the fine carbonaceous material is provided to the mixer. Waste generated in a steel mill may be used as the fine carbonaceous material, or the fine carbonaceous material may be stored in a hopper and then fed from the hopper at a certain rate, to be used.

In step S125, the fine carbonaceous material and the sludge are mixed in the mixer. The fine carbonaceous material and the sludge may be uniformly mixed to manufacture the iron-containing by-product. In this case, since the fine carbonaceous material with a relatively low moisture content is mixed with the sludge, a moisture content of the iron-containing by-product may be properly adjusted by reducing a moisture content of the sludge. Through the above steps, the iron-containing by-product may be manufactured.

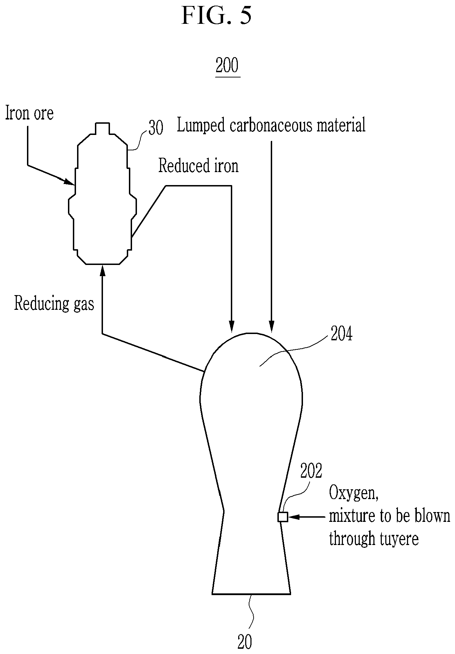

FIG. 5 schematically shows a modified example of the molten iron manufacturing apparatus 100 of FIG. 2. Since a molten iron manufacturing apparatus 200 of FIG. 5 is similar to the molten iron manufacturing apparatus 100 of FIG. 2, the same reference numerals are used for the same portions and a detailed description thereof is omitted.

As shown in FIG. 5, the molten iron manufacturing apparatus 200 includes a melting gasification furnace 20 and a packed-bed reduction furnace 30. In addition, the molten iron manufacturing apparatus 200 may include other devices, if necessary. Iron ore is charged into the packed-bed reduction furnace 30 and is reduced. The iron ore charged into the packed-bed reduction furnace 30 is dried in advance, and then manufactured as reduced iron while passing through the packed-bed reduction furnace 30. The packed-bed reduction furnace 30 receives reducing gas supplied from the melting gasification furnace 20, and forms a packed bed therein. The reduced iron and lumped carbonaceous material are charged into the melting gasification furnace 20, and oxygen and a mixture to be blown through a tuyere are blown into the melting gasification furnace 20 through a tuyere 202. Since the mixture to be blown through the tuyere is blown into the melting gasification furnace 20, an amount of the reduced iron and the lumped carbonaceous material that are charged through a dome portion 204 of the melting gasification furnace 20, to be used may be reduced. As a result, it is possible to greatly improve fuel costs required to manufacture molten iron.

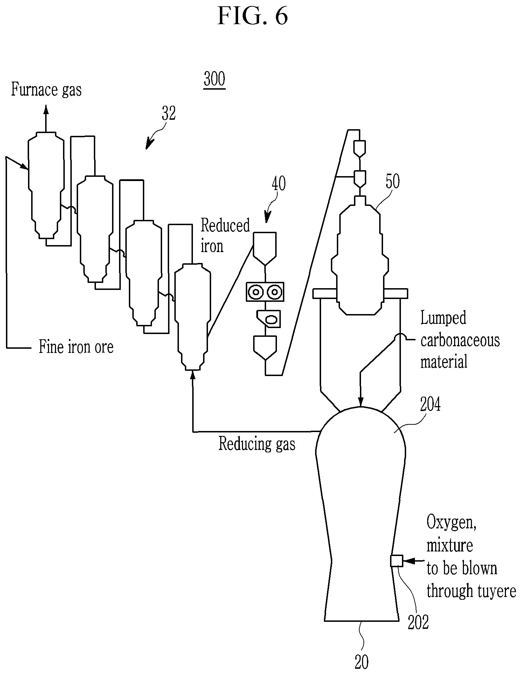

FIG. 6 schematically shows a modified example of the molten iron manufacturing apparatus 100 of FIG. 1. Since a molten iron manufacturing apparatus 300 of FIG. 6 is similar to the molten iron manufacturing apparatus 100 of FIG. 1, the same reference numerals are used for the same portions and a detailed description thereof is omitted.

As shown in FIG. 6, the molten iron manufacturing apparatus 300 includes a melting gasification furnace 20, a fluidized-bed reduction furnace 32, a reduced iron compression device 40, and a compressed iron storage tank 50. Here, the compressed iron storage tank 50 may be omitted.

A lumped carbonaceous material is charged into the melting gasification furnace 20, and forms a coal packed bed in the melting gasification furnace 20. Here, the lumped carbonaceous material generates reducing gas in the melting gasification furnace 20, and the generated reducing gas is supplied to the fluidized-bed reduction furnace 32. Fine iron ore is supplied to the fluidized-bed reduction furnace 32 including a fluidized bed, and is allowed to flow by the reducing gas supplied from the melting gasification furnace 20 to fluidized-bed reduction furnaces 32, to be manufactured as reduced iron. The reduced iron is compressed by the reduced iron compression device 40, and the compressed iron is stored in the compressed iron storage tank 50. The compressed iron is supplied from the compressed iron storage tank 50 to the melting gasification furnace 20 and is melted in the melting gasification furnace 20. Since a mixture to be blown through a tuyere is blown together with oxygen into the melting gasification furnace 20, an amount of the compressed iron and the lumped carbonaceous material that are charged through a dome portion 204 of the melting gasification furnace 20, to be used may be reduced. As a result, it is possible to greatly improve fuel costs required to manufacture molten iron.

Hereinafter, the present invention will be described in more detail through experimental examples. The following experimental examples are merely to illustrate the present invention, and the present invention is not limited thereto.

### Experimental Examples

### Experiment on pipe wear rate based on average particle size of mixture to be blown through tuvere

Sludge containing T.Fe in an amount of 54.5 wt % among iron-containing by-products and having a moisture content of 30 wt % was dried in advance until the moisture content became 25 wt %. Also, 12 wt % of the sludge was mixed with raw coal for pulverized coal, followed by drying and crushing together with pulverized coal in a pulverizer, to prepare a mixture to be blown through a tuyere. An average particle size of the mixture to be blown through the tuyere was adjusted by changing a crushing time. In addition, the mixture to be blown through the tuyere was blown into a melting gasification furnace through a pulverized coal transfer pipe made of a carbon steel pipe for pressure service. A wear rate of the pulverized coal transfer pipe based on the average particle size of the mixture to be blown through the tuyere was measured. A detailed description of the experiment may be easily understood by a person with ordinary skill in the art to which the present invention pertains, and accordingly is omitted.

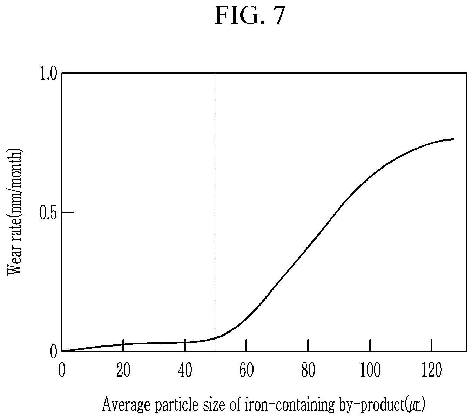

FIG. 7 is a graph showing a wear rate of a pulverized coal transfer pipe based on an average particle size of a mixture to be blown through a tuyere.

As shown in FIG. 7, when an average particle size of iron-containing by-products exceeds 50 µm, the wear rate of the pulverized coal transfer pipe was rapidly increased. In other words, it was found that iron-containing by-products with a large average particle size collide with an inner wall of the pulverized coal transfer pipe to damage the pulverized coal transfer pipe. Thus, it was found that it is preferable to keep the average particle size of iron-containing by-products to be less than or equal to 50 µm.

### Experiment on pipe blockage based on moisture content and average particle size of mixture to be blown through tuvere

An experiment on a pipe blockage was conducted in the same manner as the above-described experiment on the pipe wear rate based on the average particle size of the iron-containing by-products. A proportion of particles having an average particle size of 10 µm or less in the mixture to be blown through the tuyere was controlled by adjusting a crushing time of a pulverizer. In other words, the proportion of the particles having the average particle size of 10 µm or less was increased by increasing the crushing time of the pulverizer. Also, a moisture content of a finally obtained mixture to be blown through the tuyere was adjusted.

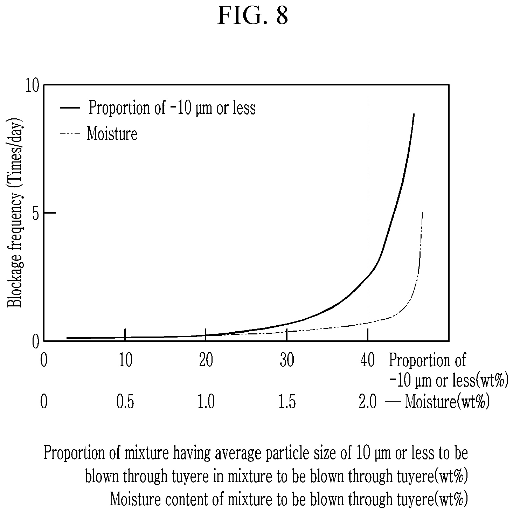

FIG. 8 is a graph showing a frequency of a pipe blockage based on a moisture content and an average particle size of a mixture to be blown through a tuyere.

As shown in FIG. 8, it was found that when a proportion of a mixture having an average particle size of 10 µm or less to be blown through the tuyere in the mixture to be blown through the tuyere exceeds 40 wt %, a frequency of a blockage of a transfer pipe rapidly increased. In other words, when a deposit in the transfer pipe is formed, a transfer pipe blockage phenomenon rapidly increases. Thus, it was possible to prevent a blockage of a transfer pipe by adjusting the proportion of the mixture having the average particle size of 10 µm or less to be blown through the tuyere in the mixture to be blown through the tuyere to be less than or equal to 40 wt %. Also, it was found that when a moisture content of the mixture to be blown through the tuyere exceeds 2.0 wt %, the transfer pipe blockage phenomenon was significantly increased. Thus, it was found that it is preferable to adjust the moisture content of the mixture to be blown through the tuyere to be less than or equal to 2.0 wt %.

### Experiment on damage and blockage of pipe based on blowing of mixture to be blown through tuvere

Sludge containing T.Fe in an amount of 54.5 wt % among iron-containing by-products and having an average particle size of 11 µm and a moisture content of 30 wt % was dried in advance until the moisture content became 25 wt %. Also, 12 wt % of the sludge was mixed with raw coal for pulverized coal, followed by drying and crushing together with pulverized coal in a pulverizer, to prepare a mixture to be blown through a tuyere. In addition, the mixture to be blown through the tuyere was blown into a melting gasification furnace through a pulverized coal transfer pipe made of a carbon steel pipe for pressure service. Specifications of the pulverized coal transfer pipe in each experimental example are shown in Table 3 below.

**(Table 3)**

| Experimental example | Pipe diameter | Carrier gas | Flow rate of carrier gas | Flow velocity | Pressure | Pipe material |
|---|---|---|---|---|---|---|
| Experimental Example 1 | 32.5 mm | Nitrogen | 150 Nm³/h | 9.4 m/s | 6 bar | STPG38 |
| Experimental Example 2 | 24.3 mm | Nitrogen | 129 Nm³/h | 13.9 m/s | 6 bar | STPG38 |

Experiments were conducted for 4 months under the conditions shown in Table 3. In other words, a variation in a pipe thickness was observed while sludge being blown by adjusting an amount of the sludge to be blown, in each of Experimental Examples 1 and 2. As shown in Table 4 below, it was found that there was no significant influence on the variation in the pipe thickness. Thus, it was confirmed that an inside of the pipe was not damaged by the mixture to be blown through the tuyere.

**(Table 4)**

| Experimental example | Amount of sludge to be blown | Total number of days for blowing | Variation in pipe thickness (mm) | | | |
|---|---|---|---|---|---|---|
| | | | First | After 1 month | After 2 months | After 3 months |
| Experimental Example 1 | 20 kg/t-p | 58 days | 4.76 | 4.85 | 4.80 | 4.80 |
| Experimental Example 2 | 11 kg/t-p | 51 days | 4.00 | - | 4.04 | 3.95 |

Meanwhile, the results obtained by observing a pipe blockage phenomenon under the above-described conditions were as follows. As Comparative Example 1, a proportion of a mixture having an average particle size of 10 µm or less to be blown through the tuyere in the mixture to be blown through the tuyere was adjusted to be 42 wt % by adjusting the crushing time of the pulverizer. Results of the experiment are shown in Table 5 below.

A shown in Table 5, it was found that the pipe blockage phenomenon hardly occurred when the proportion of the mixture having the average particle size of 10 µm or less to be blown through the tuyere in the mixture to be blown through the tuyere is less than or equal to 40 wt %. However, when the proportion of the mixture having the average particle size of 10 µm or less to be blown through the tuyere in the mixture to be blown through the tuyere exceeds 40 wt %, the pipe blockage phenomenon frequently occurred. Thus, it was found that it is preferable to adjust the proportion of the mixture having the average particle size of 10 µm or less to be blown through the tuyere in the mixture to be blown through the tuyere to be less than or equal to 40 wt %.

**(Table 5)**

| Experimental example | Proportion of mixture having average particle size of 10 µm or less to be blown through tuyere in mixture to be blown through tuyere | Pipe blockage |
|---|---|---|
| Experimental Example 1 | 18 wt % | - |
| Experimental Example 2 | 24 wt % | 1 time/day |
| Comparative Example 1 | 42 wt % | 8 times/day |

### <Description of symbols>

- 20.: Melting gasification furnace
- 30.: Packed-bed reduction furnace
- 32.: Fluidized-bed reduction furnace
- 40.: Reduced iron compression device
- 50.: Compressed iron storage tank
- 100, 200, 300.: Molten iron manufacturing apparatus
- 102.: Pulverizer
- 104.: Hopper
- 202.: Tuyere
- 204.: Dome portion

## Claims

1. A method for manufacturing molten iron, the method comprising:
providing an iron-containing by-product that includes sludge (S10);
charging a lumped carbonaceous material and a reduced iron into a melting gasification furnace (S20);
crushing the iron-containing by-product together with a fine carbonaceous material to provide a mixture to be blown through a tuyere (S30);
blowing, through the tuyere (202) into the melting gasification furnace (20),
oxygen and the mixture to be blown through the tuyere (S40); and
manufacturing molten iron in the melting gasification furnace (S50)
wherein in the providing of the mixture to be blown through the tuyere (202), an average particle size of the iron-containing by-product is greater than 0 µm and less than or equal to 50 µm,
wherein, in the providing of the mixture to be blown through the tuyere (202), a mixture having a particle size of 10 µm or less to be blown through the tuyere in the mixture to be blown through the tuyere is less than or equal to 40 wt %,
wherein, in the providing of the mixture to be blown through the tuyere (202), a moisture content of the mixture to be blown through the tuyere is greater than 0 wt % and less than or equal to 2 wt %.

2. The method of claim 1, wherein,
the providing of the iron-containing by-product includes:
naturally drying the sludge (S113) and adjusting a moisture content of the sludge to be in a range of 15 wt % to 25 wt %; and
adjusting a moisture content of the iron-containing by-product to be greater than 0 wt % and less than or equal to 13 wt % by mixing the sludge and
another fine carbonaceous material having a moisture content greater than 0 wt % and less than or equal to 10 wt % (S115).

3. The method of claim 2, wherein,
in the adjusting of the moisture content of the iron-containing by-product, a volume ratio of the other fine carbonaceous material to the sludge is greater than a mass ratio of the other fine carbonaceous material to the sludge.

4. The method of claim 1, wherein,
the providing of the iron-containing by-product includes
transferring the sludge and providing the sludge to a mixer (S121);
providing another fine carbonaceous material to the mixer (S123); and
adjusting a moisture content of the iron-containing by-product to be greater than 0 wt % and less than or equal to 13 wt % by mixing the sludge and the other fine carbonaceous material in the mixer (S125).

5. The method of claim 1, wherein,
an amount of total iron (T.Fe) contained in the sludge is greater than or equal to 20 wt % and less than 100%.

6. The method of claim 1, further comprising:
converting iron ore into the reduced iron by receiving reducing gas supplied from the melting gasification furnace (20); and
providing the reduced iron to the melting gasification furnace (20).

7. The method of claim 6, wherein,
in the converting of the iron ore into the reduced iron, the iron ore is charged into a fluidized-bed reduction furnace (32) or a packed-bed reduction furnace (30) connected to the melting gasification furnace (20), and is converted into the reduced iron.

## Patentansprüche

1. Verfahren zum Herstellen von Eisenschmelze, wobei das Verfahren umfasst:
Bereitstellen eines eisenhaltigen Nebenprodukts, das Schlamm enthält (S10);
Einbringen eines klumpigen kohlehaltigen Materials und reduzierten Eisens in einen Schmelzvergasungsofen (S20);
Zerstoßen des eisenhaltigen Nebenprodukts zusammen mit einem feinen kohlehaltigen Material, um ein Gemisch bereitzustellen, das durch eine Blasform geblasen werden soll (S30);
Einblasen, und zwar durch die Blasform (202) in den Schmelzvergasungsofen (20), von Sauerstoff und des Gemischs, das durch die Blasform geblasen werden soll (S40); und
Herstellen von Eisenschmelze im Schmelzvergasungsofen (S50),
wobei beim Bereitstellen des Gemischs, das durch die Blasform (202) geblasen werden soll, eine mittlere Partikelgröße des eisenhaltigen Nebenprodukts größer als 0 µm und kleiner als oder gleich 50 µm ist,
wobei beim Bereitstellen des Gemischs, das durch die Blasform (202) geblasen werden soll, ein Gemisch mit einer Partikelgröße von 10 µm oder weniger, das durch die Blasform geblasen werden soll, das im Gemisch, das durch die Blasform geblasen werden soll, kleiner als oder gleich 40 Gew.-% ist,
wobei beim Bereitstellen des Gemischs, das durch die Blasform (202) geblasen werden soll, ein Feuchtigkeitsgehalt des Gemischs, das durch die Blasform geblasen werden soll, größer als 0 Gew.-% und kleiner als oder gleich 2 Gew.-% ist.

2. Verfahren nach Anspruch 1, wobei
das Bereitstellen des eisenhaltigen Nebenprodukts beinhaltet:
natürliches Trocknen des Schlamms (S113) und Einstellen eines Feuchtigkeitsgehalts des Schlamms, dass er in einem Bereich von 15 Gew.-% bis 25 Gew.-% liegt; und
Einstellen eines Feuchtigkeitsgehalts des eisenhaltigen Nebenprodukts, dass er größer als 0 Gew.-% und kleiner als oder gleich 13 Gew.-% ist, indem der Schlamm und ein anderes feines kohlehaltiges Material mit einem Feuchtigkeitsgehalt, der größer als 0 Gew.-% und kleiner als oder gleich 10 Gew.-% ist, gemischt werden (S115).

3. Verfahren nach Anspruch 2, wobei
beim Einstellen des Feuchtigkeitsgehalts des eisenhaltigen Nebenprodukts ein Volumenverhältnis des anderen feinen kohlehaltigen Materials zum Schlamm größer ist als ein Massenverhältnis des anderen kohlehaltigen Materials zum Schlamm.

4. Verfahren nach Anspruch 1, wobei
das Bereitstellen des eisenhaltigen Nebenprodukts beinhaltet
Überführen des Schlamms zu einem und Bereitstellen des Schlamms an einen Mischer (S121);
Bereitstellen eines anderen feinen kohlehaltigen Materials an den Mischer (S123); und
Einstellen eines Feuchtigkeitsgehalts des eisenhaltigen Nebenprodukts, dass er größer als 0 Gew.-% und kleiner als oder gleich 13 Gew.-% ist, indem der Schlamm und das andere feine kohlehaltige Material im Mischer gemischt werden (S125).

5. Verfahren nach Anspruch 1, wobei
eine im Schlamm enthaltene Gesamteisenmenge (T.Fe) größer als oder gleich 20 Gew.-% und kleiner als 100 Gew.-% ist.

6. Verfahren nach Anspruch 1, darüber hinaus umfassend:
Umwandeln von Eisenerz in das reduzierte Eisen, indem aus dem Schmelzvergasungsofen (20) zugeführtes Reduktionsgas aufgenommen wird; und
Bereitstellen des reduzierten Eisens an den Schmelzvergasungsofen (20).

7. Verfahren nach Anspruch 6, wobei
beim Umwandeln des Eisenerzes in reduziertes Eisen das Eisenerz in einen Wirbelschicht-Reduktionsofen (32) oder einen Festbett-Reduktionsofen (30) eingebracht wird, die an den Schmelzvergasungsofen (20) angeschlossen sind, und in das reduzierte Eisen umgewandelt wird.

## Revendications

1. Procédé de fabrication de fonte liquide, le procédé comprenant :
la fourniture d'un sous-produit contenant du fer qui inclut de la boue (S10) ;
le chargement d'un matériau carboné agrégé et d'un fer réduit dans un four de fusion-gazéification (S20) ;
le concassage du sous-produit contenant du fer conjointement avec un matériau carboné fin pour fournir un mélange destiné à être soufflé via une tuyère (S30) ;
le soufflage, via la tuyère (202) vers le four de fusion-gazéification (20), d'oxygène et du mélange destiné à être soufflé via la tuyère (S40) ; et
la fabrication de fonte liquide dans le four de fusion-gazéification (S50),
sachant que lors de la fourniture du mélange destiné à être soufflé via la tuyère (202), une taille de particule moyenne du sous-produit contenant du fer est supérieure à 0 µm et inférieure ou égale à 50 µm,
sachant que, lors de la fourniture du mélange destiné à être soufflé via la tuyère (202), un mélange ayant une taille de particule de 10 µm ou moins destiné à être soufflé via la tuyère dans le mélange destiné à être soufflé via la tuyère est inférieur ou égal à 40 % en poids,
sachant que, lors de la fourniture du mélange destiné à être soufflé via la tuyère (202), une teneur en humidité du mélange devant être soufflé via la tuyère est supérieure à 0 % et inférieure ou égale à 2 % en poids.

2. Le procédé de la revendication 1, sachant que
la fourniture du sous-produit contenant du fer inclut :
le séchage naturel de la boue (S113) et le réglage d'une teneur en humidité de la boue pour qu'elle soit comprise dans une plage de 15 % en poids à 25 % en poids ; et
le réglage d'une teneur en humidité du sous-produit contenant du fer pour qu'elle soit supérieure à 0 % en poids et inférieure ou égale à 13 % en poids en mélangeant la boue et un autre matériau carboné fin ayant une teneur en humidité supérieure à 0 % en poids et inférieure ou égale à 10 % en poids (S115).

3. Le procédé de la revendication 2, sachant que
lors du réglage de la teneur en humidité du sous-produit contenant du fer, un rapport de volume de l'autre matériau carboné fin à la boue est supérieur à un rapport de masse de l'autre matériau carboné fin à la boue.

4. Le procédé de la revendication 1, sachant que
la fourniture du sous-produit contenant du fer inclut
le transfert de la boue et la fourniture de la boue à un mélangeur (S121) ;
la fourniture d'un autre matériau carboné fin au mélangeur (S123) ; et
le réglage d'une teneur en humidité du sous-produit contenant du fer pour qu'elle soit supérieure à 0 % en poids et inférieure ou égale à 13 % en poids en mélangeant la boue et l'autre matériau carboné fin dans le mélangeur (S125).

5. Le procédé de la revendication 1, sachant que
une quantité totale de fer (T.Fe) contenue dans la boue est supérieure ou égale à 20 % en poids et inférieure à 100 % en poids.

6. Le procédé de la revendication 1, comprenant en outre :
la conversion de minerai de fer en le fer réduit en recevant du gaz de réduction amené depuis le four de fusion-gazéification (20) ; et
la fourniture du fer réduit au four de fusion-gazéification (20).

7. Le procédé de la revendication 6, sachant que
lors de la conversion du minerai de fer en le fer réduit, le minerai de fer est chargé dans un four de réduction à lit fluidisé (32) ou un four de réduction à lit fixe (30) connectés au four de fusion-gazéification (20), et est converti en le fer réduit.
